# EUROPEAN PATENT APPLICATION

(11) **EP 4 064 542 A1**
(43) Date of publication of application: **28.09.2022**
(21) Application number: 20893678.1
(22) Date of filing: 26.11.2020
(51) Int. Cl.: H02M 3/335

(54) **VOLTAGE CONVERSION CIRCUIT AND POWER SUPPLY SYSTEM**

(30) Priority: 29.11.2019 CN 201911219536
(71) Applicant: Huawei Digital Power Technologies Co., Ltd., Shenzhen, Guangdong 518043 (CN)
(72) Inventor: LIANG, Tao, Shenzhen, Guangdong 518129 (CN); LIU, Weiping, Shenzhen, Guangdong 518129 (CN); LIANG, Yongtao, Shenzhen, Guangdong 518129 (CN)
(74) Representative: Thun, Clemens
(86) International application number: PCT/CN2020/131964
(87) International publication number: WO 2021/104407

(57) **Abstract**

An embodiment of this application provides a voltage conversion circuit with relatively high charging efficiency and relatively low costs, and provides a power system including the voltage conversion circuit. The power system has relatively low costs, a relatively small size, and relatively low complexity. The voltage conversion circuit includes a high-voltage conversion module, an isolation transformer, a low-voltage conversion module, and a feedback module. The high-voltage conversion module converts, along a first direction by using the isolation transformer and the low-voltage conversion module, a first direct-current voltage received from a first port into a second direct-current voltage. The low-voltage conversion module receives the second direct-current voltage from a second port, and converts the second direct-current voltage into the first direct-current voltage along a second direction by using the isolation transformer and the high-voltage conversion module. The feedback module is configured to: induce, through electromagnetic induction, electric energy generated when the low-voltage conversion module converts the second direct-current voltage along the second direction, and transfer the induced electric energy to the high-voltage conversion module.

## Description

This application claims priority to Chinese Patent Application No. 201911219536.1, filed with the China National Intellectual Property Administration on November 29, 2019 and entitled "VOLTAGE CONVERSION CIRCUIT AND POWER SYSTEM", which is incorporated herein by reference in its entirety.

### TECHNICAL FIELD

This application relates to the field of direct-current voltage conversion technologies, and in particular, to the field of bidirectional direct-current voltage conversion circuit and power system technologies.

### BACKGROUND

With the development of technologies in the field of new energy, application of new energy vehicles, for example, electric vehicles (electric vehicles), is increasingly popular. In a power system that provides a driving source in an electric vehicle or an electric automobile, when a high-voltage storage battery provides a high driving voltage for a load, because the high driving voltage is relatively high, if the high driving voltage is directly provided for a load capacitor and an operating circuit in the load, because both a voltage and a current are zero when the load capacitor is initially powered on, the load capacitor is very likely to be damaged due to a sudden increase of the current within a short time if the high driving voltage is directly loaded onto the load capacitor.

Currently, a precharge circuit is usually disposed between the high-voltage storage battery and the load capacitor. However, the precharge circuit needs to include at least a relay and a high-power line current resistor. Existence of the precharge circuit increases complexity of disposing electrical components in the power system, and increases a size. In addition, overall costs of the power system are relatively high due to a relatively large quantity of components in the precharge circuit.

### SUMMARY

Embodiments of this application provide a voltage conversion circuit and a power system, to synchronously feed back, to a high-voltage conversion module, demagnetized energy generated when a low-voltage conversion module converts a low voltage into a high voltage, so that the voltage conversion circuit has relatively high voltage conversion efficiency and relatively low costs.

According to a first aspect, an embodiment of this application provides a voltage conversion circuit, including a high-voltage conversion module, an isolation transformer, a low-voltage conversion module, and a feedback module. The high-voltage conversion module converts, along a first direction by using the isolation transformer and the low-voltage conversion module, a first direct-current voltage received from a first port into a second direct-current voltage. The first direct-current voltage is greater than the second direct-current voltage. At a time different from when the high-voltage conversion module receives the first direct-current voltage from the first port, the low-voltage conversion module receives the second direct-current voltage from a second port, and converts the second direct-current voltage into the first direct-current voltage along a second direction by using the isolation transformer and the high-voltage conversion module. The first direction is opposite to the second direction. The feedback module is configured to: induce, through electromagnetic induction, electric energy generated when the low-voltage conversion module converts the second direct-current voltage into the first direct-current voltage along the second direction, and transfer the induced electric energy to the high-voltage conversion module.

When the second direct-current voltage is converted into the first direct-current voltage along the second direction, the feedback module feeds back, to the high-voltage conversion module through electromagnetic induction, a part of electric energy generated in the low-voltage conversion module; and outputs, to a load capacitor connected to the first port, the electric energy together with the first direct-current voltage into which the second direct-current voltage is converted, thereby effectively improving precharge efficiency of the load capacitor, and effectively reducing a precharge time.

In an embodiment of this application, the high-voltage conversion module is configured to convert the first direct-current voltage into a first alternating signal along the first direction. The low-voltage conversion module is configured to convert the second direct-current voltage into a second alternating signal along the second direction. The isolation transformer is electrically connected to the high-voltage conversion module and the low-voltage conversion module, and is configured to: at different times, convert the first alternating signal into a first converted alternating signal along the first direction and transmit the first converted alternating signal to the low-voltage conversion module, or convert the second alternating signal into a second converted alternating signal along the second direction and transmit the second converted alternating signal to the high-voltage conversion module. The low-voltage conversion module is further configured to convert the first converted alternating signal into the second direct-current voltage, and the high-voltage conversion module is further configured to convert the second converted alternating signal into the first direct-current voltage. The feedback module induces electric energy generated by the low-voltage conversion module when the low-voltage conversion module converts the second direct-current voltage into the second alternating signal. When the low-voltage conversion module converts the second direct-current voltage into the first direct-current voltage through excitation and demagnetization, the low-voltage conversion module cooperates with the feedback module to feed back, by using the feedback module through electromagnetic induction, the demagnetized energy to the high-voltage conversion module, so that conversion efficiency of the low-voltage conversion module is effectively improved.

In an embodiment of this application, the low-voltage conversion module includes a low-voltage filter circuit, and the low-voltage filter circuit includes a filter winding and a filter capacitor. When the low-voltage conversion module receives the first alternating signal along the first direction, the filter winding serves as a filter inductor and constitutes a filter circuit with the filter capacitor to filter the first converted alternating signal. When the low-voltage conversion module receives the second direct-current voltage along the second direction, the filter winding is in an exciting state for storing electric energy or a demagnetizing state for releasing electric energy at different times. The feedback module induces electric energy through electromagnetic induction when the filter winding is in the exciting state for storing electric energy, and feeds back the induced electric energy to the high-voltage conversion module when the filter winding is in the demagnetizing state for releasing electric energy. The filter winding performs filtering or excitation/demagnetization at different times to enable the voltage conversion circuit to perform bidirectional voltage conversion along the first direction and the second direction.

In an embodiment of this application, the low-voltage conversion module further includes a low-voltage switch circuit, and the low-voltage switch circuit electrically connects the filter winding to the filter capacitor. The low-voltage switch circuit constitutes an excitation path for the filter winding in an excitation time period, and the low-voltage switch circuit constitutes a freewheeling path for the filter winding to release electric energy in a demagnetization time period. The excitation time period and the freewheeling time period are alternately set in terms of time to convert the second direct-current voltage into the second alternating signal. The feedback module obtains electric energy through electromagnetic induction in the excitation time period, and releases the induced electric energy and feeds back the induced electric energy to the high-voltage conversion module in the demagnetization time period. The low-voltage switch circuit is turned on or cut off under control of an external switch signal, so that the filter winding is flexibly in an exciting or demagnetizing state.

In an embodiment of this application, the feedback module includes a demagnetizing winding, a switching control unit, and a unidirectional transfer unit, and the unidirectional transfer unit, the demagnetizing winding, and the switching control unit are electrically connected to the first port in sequence. The demagnetizing winding and the filter winding constitute an electromagnetic coupler. The switching control unit is configured to: when the high-voltage conversion module performs voltage conversion to the low-voltage conversion module along the first direction, control the demagnetizing winding not to be in a conducting path, so that the feedback module does not feed back energy; and when the low-voltage conversion module performs voltage conversion to the high-voltage conversion module along the second direction, control the demagnetizing winding to be in a conducting path, so that the feedback module feeds back energy to the high-voltage conversion module. The unidirectional transfer unit is configured to control a current flow direction of the conducting path in which the demagnetizing winding is located to be the second direction. The demagnetizing winding transfers, by using the unidirectional transfer unit, the demagnetized energy obtained from the filter winding to the high-voltage conversion module and the first port, thereby improving efficiency of converting the second direct-current voltage into the first direct-current voltage, and effectively preventing loss of the demagnetized energy.

In an embodiment of this application, when the low-voltage conversion module receives the first alternating signal along the first direction, the switching control unit controls the conducting path in which the demagnetizing winding is located to be in an electrically off state, no electromagnetic induction occurs between the filter winding and the demagnetizing winding, and the filter winding serves as a filter inductor. When the low-voltage conversion module outputs the second alternating signal along the second direction, the switching control unit controls the conducting path in which the demagnetizing winding is located to be in an electrically on state, electromagnetic induction occurs between the filter winding and the demagnetizing winding, and the filter winding transmits, to the high-voltage conversion module, obtained electric energy rectified by the unidirectional transfer unit. Under control of the switching control unit, whether the feedback module cooperates with the low-voltage conversion module to perform electromagnetic induction can be accurately controlled. Further, when the low-voltage conversion module is configured to output the second direct-current voltage, the demagnetizing winding and the filter winding do not perform electromagnetic induction, thereby accurately outputting the second direct-current voltage to the second port while reducing power consumption of electronic elements in the feedback module.

In an embodiment of this application, the isolation transformer includes a first winding and a second winding. The first winding is electrically connected to the high-voltage conversion module, and the second winding is electrically connected to the low-voltage switch circuit. When receiving the first converted alternating signal along the first direction, the low-voltage switch circuit controls the second winding to be electromagnetically coupled to the first winding, to rectify the first converted alternating signal.

The converting the second direct-current voltage into the second alternating signal includes:
The low-voltage switch circuit controls the filter winding to be excited for storing electric energy and output a first direct-current voltage of a first phase in a first excitation sub-time period of the excitation time period. The low-voltage switch circuit controls the filter winding to be demagnetized for releasing electric energy in the demagnetization time period. The low-voltage switch circuit controls the filter winding to be excited for storing electric energy and output a first direct-current voltage of a second phase in a second excitation sub-time period of the excitation time period, where the first phase is opposite to the second phase. The low-voltage switch circuit controls the filter winding to be demagnetized for releasing electric energy in the demagnetization time period. The first excitation sub-time period of the excitation time period, the demagnetization time period, and the second excitation sub-time period of the excitation time period are continuous in terms of time and do not overlap.

Whether the first winding and the second winding perform electromagnetic induction and energy transfer can be accurately controlled by turning on and cutting off the low-voltage switch circuit, so that the low-voltage conversion module accurately converts the second direct-current voltage into a direct-current voltage by using the isolation transformer and outputs the direct-current voltage to the high-voltage conversion module.

More specifically, the second winding includes two series-connected sub-windings, the low-voltage switch circuit includes two switch elements, and the two switch elements are respectively electrically connected to the two sub-windings, and are configured to control the two sub-windings to be electromagnetically coupled to the first winding.

In an embodiment of this application, in the first excitation sub-time period of the excitation time period and the second excitation sub-time period of the excitation time period, the two switch elements in the low-voltage switch circuit respectively control the two sub-windings to be electromagnetically coupled to the first winding at different times, and separately control electric energy stored in the filter winding to generate the second alternating signal. In the demagnetization time period, the two switch elements control the two sub-windings not to be electromagnetically coupled to the first winding, to control the filter winding to be demagnetized for releasing stored electric energy. When the first winding receives the first alternating signal along the first direction, the two switch elements in the low-voltage switch circuit respectively control the two sub-windings to be electromagnetically coupled to the first winding at different times, to output the first converted alternating signal, and the two switch elements rectify the first converted alternating signal. An electromagnetically coupled state of the two sub-windings can be controlled by using the two switch elements, so that cooperative control on the second winding and the low-voltage conversion module is more convenient and accurate.

In an embodiment of this application, the high-voltage conversion module includes a high-voltage filter circuit and a high-voltage switch circuit, and the high-voltage filter circuit and the high-voltage switch circuit are connected in series between the first port and the isolation transformer. The high-voltage filter circuit is configured to filter the first direct-current voltage received or output from the first port. The high-voltage switch circuit is configured to: convert the first alternating signal into the first alternating signal, or rectify a signal obtained by converting the second direct-current voltage input by the isolation transformer and the low-voltage conversion module. The high-voltage filter circuit cooperates with the high-voltage switch circuit so that the high-voltage conversion module accurately performs conversion between the first direct-current voltage and the second direct-current voltage.

According to a second aspect, an embodiment of this application provides a power system, including the foregoing voltage conversion circuit, a high-voltage storage battery, and a low-voltage storage battery. The high-voltage storage battery is electrically connected to the first port, and the low-voltage storage battery is electrically connected to the second port. The high-voltage storage battery is configured to receive or output the first direct-current voltage, and the low-voltage storage battery is configured to receive or output the second direct-current voltage. The power system can effectively improve precharge efficiency of a load capacitor and effectively reduce a precharge time.

In an embodiment of this application, the voltage conversion circuit precharges a load capacitor in a load after receiving the second direct-current voltage from the low-voltage storage battery and converting the second direct-current voltage into the first direct-current voltage along the second direction. After the precharge of the load capacitor is completed, the high-voltage storage battery can drive the load capacitor and other functional circuits in the load by providing the first direct-current voltage. Because precharge efficiency of the load capacitor is improved, a startup speed of the other functional circuits in the load is also increased.

### BRIEF DESCRIPTION OF DRAWINGS

To describe structural features and functions of this application more clearly, the following describes the structural features and the functions in detail with reference to accompanying drawings and specific embodiments.
FIG. 1 is a functional block diagram of a power system according to an embodiment of this application;
FIG. 2 is a functional block diagram of a voltage conversion circuit shown in FIG. 1;
FIG. 3 is a schematic diagram of a specific circuit structure of a voltage conversion circuit shown in FIG. 2 according to an embodiment of this application;
FIG. 4 is a schematic diagram of circuit conduction when a voltage conversion circuit performs low-voltage conversion along a first direction;
FIG. 5 is a schematic diagram of voltage waveforms of nodes when a voltage conversion circuit performs low-voltage conversion along a first direction;
FIG. 6 is a schematic diagram of circuit conduction when a voltage conversion circuit performs high-voltage conversion along a second direction;
FIG. 7 is a schematic diagram of voltage waveforms of nodes when a voltage conversion circuit performs high-voltage conversion along a second direction; and
FIG. 8 is a schematic diagram of a specific circuit structure of a voltage conversion circuit according to another embodiment of this application.

### DESCRIPTION OF EMBODIMENTS

The following clearly and completely describes technical solutions in embodiments of this application with reference to accompanying drawings in embodiments of this application.

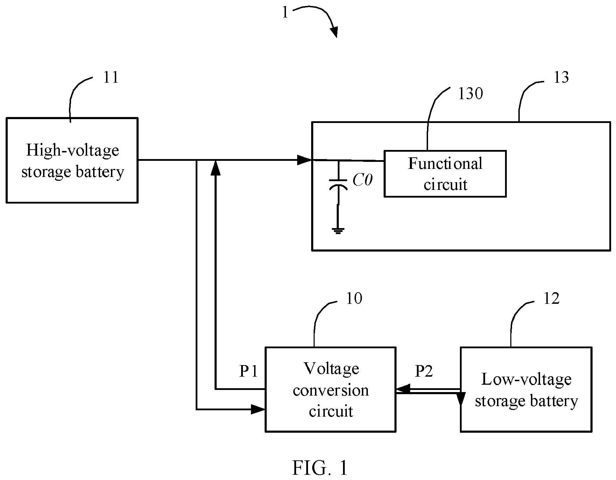

FIG. 1 is a functional block diagram of a power system 1 according to an embodiment of this application. As shown in FIG. 1, the power system 1 may be applied to a power-driven apparatus such as an automobile or an electric automobile, and the power system 1 includes a voltage conversion circuit 10, a high-voltage storage battery 11, a low-voltage storage battery 12, and a load 13.

The high-voltage storage battery 11 is electrically connected to the load 13, and is electrically connected to the voltage conversion circuit 10 through a first port P1. The high-voltage storage battery 11 is configured to provide a first direct-current voltage VI for driving a load capacitor C0 and a functional circuit 130 in the load 13. In this embodiment, the functional circuit 130 may be a circuit that needs to use electric power as a driving force and that performs different functions in a power-driven apparatus such as a motor controller circuit, an air pump controller circuit, or an oil pump controller circuit. In addition, the high-voltage storage battery 11 outputs the first direct-current voltage VI to the voltage conversion circuit 10 through the first port P1, and the voltage conversion circuit 10 performs buck conversion and then provides a voltage obtained through buck conversion to the low-voltage storage battery 12 for energy storage and charging; or the high-voltage storage battery 11 receives, through the first port PI, the first direct-current voltage VI obtained by the voltage conversion circuit 10 by performing boost conversion.

The low-voltage storage battery 12 is electrically connected to the voltage conversion circuit 10 through a second port P2. The low-voltage storage battery 12 is configured to output a second direct-current voltage V2. The voltage conversion circuit 10 converts the second direct-current voltage V2 into the first direct-current voltage V1 to precharge the load capacitor C0. In this embodiment, the precharge is to provide a relatively small charging current to charge the load capacitor C0 before the high-voltage storage battery 11 provides the first direct-current voltage V1 to the load capacitor C0 and the functional circuit, to avoid damage to the high-voltage storage battery 11 caused by a relatively large charging current generated due to an excessively large voltage difference between the first direct-current voltage V1 and the load capacitor C0 in a short time. In addition, because the high-voltage storage battery 11 totally does not need to provide other precharge circuits to precharge the load capacitor C0, circuit complexity of the power system 1 is effectively reduced, and a size and costs are also reduced.

After the precharge of the load capacitor C0 is completed, the high-voltage storage battery 11 can drive the load capacitor C0 and other functional circuits in the load 13 by providing the first direct-current voltage. Because precharge efficiency of the load capacitor C0 is improved, a startup speed of the other functional circuits in the load is also increased.

The voltage conversion circuit 10 can further convert the first direct-current voltage V1 output by the high-voltage storage battery 11 into the second direct-current voltage V2, and provide the second direct-current voltage V2 to the low-voltage storage battery 12 for charging the low-voltage storage battery 12. To be specific, in different time periods, the voltage conversion circuit 10 can convert the first direct-current voltage V1 output by the high-voltage storage battery 11 into the second direct-current voltage V2, or convert the second direct-current voltage V2 output by the low-voltage storage battery 12 into the first direct-current voltage VI, to implement bidirectional conversion between the first direct-current voltage V1 and the second direct-current voltage V2.

The first direct-current voltage V1 is greater than the second direct-current voltage V2. The first direct-current voltage V1 is mainly used to drive a high-power power circuit, and the second direct-current voltage V2 is mainly used to drive a low-power control circuit.

In this embodiment, for example, the first direct-current voltage V1 may be greater than 200 to 350 volts (V), and the second direct-current voltage V2 may be 9 to 16 V

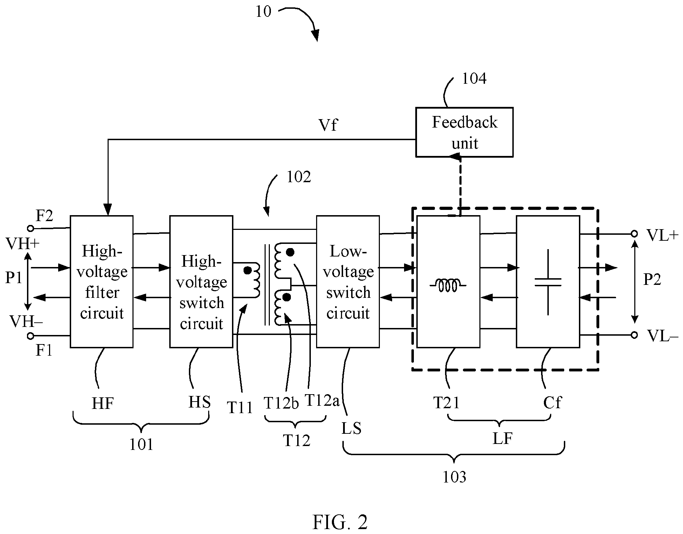

FIG. 2 is a functional block diagram of the voltage conversion circuit 10 shown in FIG. 1. As shown in FIG. 2, the voltage conversion circuit 10 configured to perform bidirectional direct-current voltage conversion includes a high-voltage conversion module 101, an isolation transformer 102, a low-voltage conversion module 103, and a feedback module 104.

Specifically, the high-voltage conversion module 101 and the low-voltage conversion module 103 are separately electrically connected to the isolation transformer 102. The first direct-current voltage V1 is converted into the second direct-current voltage V2 along a first direction F1 through cooperation between the high-voltage conversion module 101, the isolation transformer 102, and the low-voltage conversion module 103. At a different time, the second direct-current voltage V2 is converted into the first direct-current voltage V1 along a second direction F2 opposite to the first direction F1 through cooperation between the low-voltage conversion module 103, the isolation transformer 102, and the high-voltage conversion module 101, thereby implementing bidirectional conversion between the first direct-current voltage V1 and the second direct-current voltage V2.

When the second direct-current voltage V2 is converted into the first direct-current voltage V1 along the second direction F2, the feedback module 104 is configured to: feed back, to the high-voltage conversion module 101 through electromagnetic induction, a part of electric energy generated in the low-voltage conversion module 103; and output, to the load capacitor C0, the electric energy together with the first direct-current voltage V1 into which the second direct-current voltage V2 is converted, thereby effectively improving precharge efficiency of the load capacitor C0, and effectively reducing a precharge time. In this embodiment, the low-voltage conversion module 103 precharges the load capacitor C0 by using the first direct-current voltage V1 obtained through conversion by the isolation transformer 102 and the high-voltage conversion module. In addition, the feedback module 104 further feeds back the induced electric energy together with the first direct-current voltage V1 to the high-voltage conversion module 101 to precharge the load capacitor C0, so that a precharge time can be reduced. For example, the precharge time may be controlled within milliseconds. In addition, when the first direct-current voltage is converted into the second direct-current voltage V2 along the first direction F1, the feedback module 104 is not in an operating state.

More specifically, when low-voltage conversion is implemented along the first direction F1, the high-voltage conversion module 101 is electrically connected to the high-voltage energy storage battery 11 through the first port P1, and is configured to: receive the first direct-current voltage V1 from the high-voltage energy storage battery 11, convert the first direct-current voltage V1 into a first alternating signal along the first direction F1, and transmit the first alternating signal to the isolation transformer 102. The isolation transformer 102 continues to convert the first alternating signal into a first converted alternating signal along the first direction F1, and transmits the first converted alternating signal to the low-voltage conversion module 103. The low-voltage conversion module 103 converts the received first converted alternating signal into the second direct-current voltage V2.

In this embodiment, the first port P1 includes a high-voltage bus terminal VH+ and a low-voltage bus VH-. The high-voltage bus terminal VH+ and the low-voltage bus VH- cooperate to receive or output the first direct-current voltage V1. The low-voltage bus VH- may be a first ground terminal GND1.

When high-voltage conversion is implemented along the second direction F2, the low-voltage conversion module 103 is electrically connected to the low-voltage energy storage battery 12 through the second port P2, and is configured to: receive the second direct-current voltage V2 from the low-voltage storage battery 12, convert the second direct-current voltage V2 into a second alternating signal, and transmit the second alternating signal to the isolation transformer 102. The isolation transformer 102 converts the second alternating signal into a second converted alternating signal along the second direction F2, and transmits the second converted alternating signal to the high-voltage conversion module 101. The high-voltage conversion module 101 converts the received second converted alternating signal into the first direct-current voltage V1.

In this embodiment, the second port P2 includes a high-voltage reference terminal VL+ and a low-voltage reference terminal VL-. The high-voltage reference terminal VL+ and the low-voltage reference terminal VLcooperate to receive or output the second direct-current voltage V2. The low-voltage bus V- may be a second ground terminal GND2. In this embodiment, the first ground terminal GND1 is different from the second ground terminal GND2. The first ground terminal GND1 is a high-voltage analog ground, and the second ground terminal GND2 is a low-voltage reference ground, for example, a digital ground.

Still referring to FIG. 2, as shown in FIG. 2, the high-voltage conversion module 101 includes a high-voltage filter circuit HF and a high-voltage switch circuit HS. The high-voltage filter circuit HF is electrically connected to the first port P1, and the high-voltage switch circuit HS electrically connects the high-voltage filter circuit to a first winding T11 of the isolation transformer 102.

When the first direct-current voltage V1 is input to the high-voltage conversion module 101 along the first direction F1, the high-voltage filter circuit HF is configured to filter the first direct-current voltage VI, and the high-voltage switch circuit HS is configured to convert a filtered first direct-current voltage V1 into the first alternating signal.

When the second converted alternating signal is input to the high-voltage conversion module 101 along the second direction F2, the high-voltage switch circuit HS directly outputs the second converted alternating signal to the high-voltage filter circuit HF for filtering, and then transmits a filtered second converted alternating signal to the first port P1.

The isolation transformer 102 includes the first winding T11 and a second winding T12. The first winding T11 and the second winding T12 are isolated from each other and constitute an electromagnetic coupler. To be specific, only magnetic coupling but no electrical connection relationship exists between the first winding T11 and the second winding T12. When the first winding T11 has an alternating voltage signal, an alternating magnetic flux is induced between the first winding T11 and the second winding T12 to generate an induced voltage on the second winding T12, to convert the voltage signal received by the first winding T11 into another voltage signal output by the second winding T12.

Conversion between different voltages on the first winding T11 and the second winding T12 can be implemented by setting a quantity of coils in the first winding T11 and the second winding T12. In this embodiment, the second winding T12 further includes two series-connected sub-windings T12a and T12b. The two sub-windings T12a and T12b are not in an electromagnetically coupled state at the same time. To be specific, the sub-windings T12a and T12b are electromagnetically coupled to the first winding T11 at different times.

The low-voltage conversion module 103 includes a low-voltage switch circuit LS and a low-voltage filter circuit LF. The low-voltage switch circuit LS is electrically connected to the second winding T12. The low-voltage filter circuit LF is electrically connected between the low-voltage switch circuit LS and the second port P2.

The low-voltage filter circuit LF includes a filter winding T21 and a filter capacitor Cf. The filter winding T21 and the low-voltage filter capacitor Cf are electrically connected to the low-voltage switch circuit LS and the second port P2.

When the first converted alternating signal is received along the first direction F1 and input to the low-voltage conversion module 101, the low-voltage switch circuit LS controls the sub-windings T12a and T12b to be in an electromagnetically coupled state at different times, to rectify the first converted alternating signal and transmit a rectified first converted alternating signal to the filter winding T21 and the low-voltage filter capacitor Cf in the low-voltage filter circuit LF. The filter winding T21 and the low-voltage filter capacitor Cf filter the rectified first converted alternating signal to obtain the second direct-current voltage V1. In other words, when low-voltage conversion is performed along the first direction F1, the filter winding T21 serves only as a filter inductor, and cooperates with the filter capacitor Cf to filter the second converted alternating signal

When the first direct-current voltage V1 is received from the second port P2 along the second direction F2, the filter winding T21 in the low-voltage filter circuit HF is in an exciting state for storing energy or a demagnetizing state for releasing energy, in cooperation with the low-voltage switch circuit HS. When the filter winding T21 is in the exciting state for storing energy, the first direct-current voltage signal V2 is converted into the second alternating signal, and the second alternating signal is provided to the second winding T21.

When the filter winding T21 is in the demagnetizing state for releasing energy, the feedback module 104 and the filter winding T21 are in an electromagnetically coupled state, that is, the feedback module 104 and the filter winding T21 constitute an electromagnetic coupler. In addition, the feedback module 104 provides a demagnetization loop for the feedback module 104 so that the filter winding T21 releases stored electric energy, and the feedback module 104 converts the electric energy released by the filter winding T21 into a feedback voltage Vf, and feeds back and transmits the feedback voltage Vf to the first port P1. Both the feedback voltage Vf and the second direct-current voltage V2 are provided to the first port P1, thereby effectively improving precharge efficiency of the load capacitor C0.

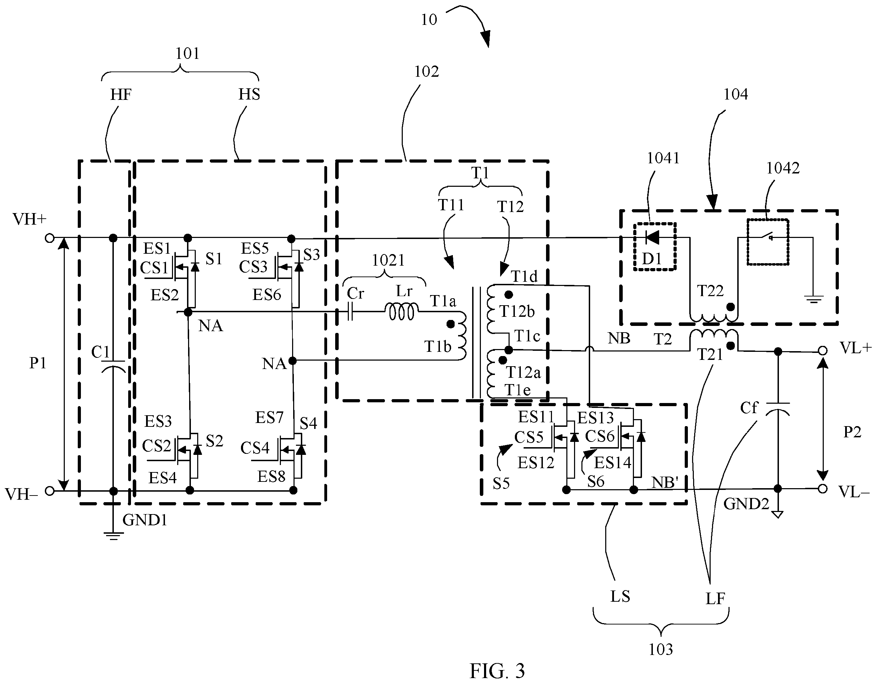

FIG. 3 is a schematic diagram of a specific circuit structure of a voltage conversion circuit 10 shown in FIG. 2 according to an embodiment of this application.

As shown in FIG. 3, the load capacitor C0 is reused as the high-voltage filter circuit HF, and the load capacitor C0 is electrically connected to the high-voltage bus terminal V+ and the low-voltage bus terminal V- of the first port.

The high-voltage switch circuit HS includes a full-bridge switch circuit that includes four switch elements.

Specifically, the four switch elements are a first switch S1, a second switch S1, a third switch S3, and a fourth switch S4, the first switch S1 and the second switch S2 constitute a first bridge arm (branch) AMI, and the third switch S3 and the fourth switch S4 constitute a fourth bridge arm (branch) AM2.

The first bridge arm AMI and the first bridge arm AM2 are connected in parallel. The first bridge arm AMI includes a first transmit terminal NA, and the first bridge arm AMI includes a second transmit terminal NA'. The first transmit terminal NA and the second transmit terminal NA' cooperate to output the first alternating signal or receive the second converted alternating signal.

Specifically, the first switch S1 includes a first control terminal CS1, a first conducting terminal ES1, and a second conducting terminal ES2. The second switch S2 includes a second control terminal CS2, a third conducting terminal ES3, and a fourth conducting terminal ES4.

The first control terminal CS1 is configured to receive a first control signal PS1, and the second control terminal CS2 is configured to receive a second control signal PS2. The first control signal PS1 and the second control signal PS2 are pulse signals with a same duty cycle and a same frequency but opposite phases. In this embodiment, the first control signal PS1 and the second control signal PS2 are pulse width modulation (Pulse Width Modulation, PWM) signals, and a duty cycle of the pulse width modulation signals may be set within a range of 0 to 100% according to an actual requirement. For example, 50% may be selected.

The first conducting terminal ES1 is electrically connected to the high-voltage bus terminal VH+, and the second conducting terminal ES2 is electrically connected to the first transmission NA. The third conducting terminal ES3 is electrically connected to the first inverter output terminal NA, and the fourth conducting terminal ES4 is electrically connected to the low-voltage bus terminal VL-. In other words, the second conducting terminal ES2 and the third conducting terminal ES3 are directly electrically connected.

In this embodiment, the first switch S1 and the second switch S2 are metal-oxide-semiconductor (metal-oxide-semiconductor, MOS) field effect transistors. For the first switch S1, when the first switch S1 is a MOS transistor, the first control terminal CS1 is a gate G (not marked) of the MOS transistor, the first conducting terminal ES1 is a drain D (not marked) of the MOS transistor, and the second conducting terminal ES2 is a source S (not marked) of the MOS transistor. For the second switch S2, when the second switch S2 is a MOS transistor, the second control terminal CS2 is a gate G (not marked) of the MOS transistor, the third conducting terminal ES3 is a drain D (not marked) of the MOS transistor, and the fourth conducting terminal ES4 is a source S (not marked) of the MOS transistor.

The third switch S3 includes a third control terminal CS3, a fifth conducting terminal ES5, and a sixth conducting terminal ES6. The fourth switch S4 includes a fourth control terminal CS4, a seventh conducting terminal ES7, and an eighth conducting terminal ES8.

The third control terminal CS3 is configured to receive a third control signal PS3, and the fourth control terminal CS4 is configured to receive a fourth control signal PS4. The third control signal PS3 and the fourth control signal PS4 are PWM signals with a same frequency but opposite phases.

The fifth conducting terminal ES5 is electrically connected to the high-voltage bus terminal VH+, and the sixth conducting terminal ES6 is electrically connected to the second transmit terminal NA'. The seventh conducting terminal ES7 is electrically connected to the second transmit terminal NA', and the eighth conducting terminal ES8 is electrically connected to the low-voltage bus V-.

For the third switch S3, when the third switch S3 is a MOS transistor, the third control terminal CS3 is a gate G (not marked) of the MOS transistor, the fifth conducting terminal ES5 is a drain D (not marked) of the MOS transistor, and the sixth conducting terminal ES6 is a source S (not marked) of the MOS transistor. For the fourth switch S4, when the fourth switch S4 is a MOS transistor, the fourth control terminal CS2 is a gate G (not marked) of the MOS transistor, the seventh conducting terminal ES7 is a drain D (not marked) of the MOS transistor, and the eighth conducting terminal ES8 is a source S (not marked) of the MOS transistor.

In this embodiment, the first switch S1 to the fourth switch S4 of the four switch elements are all N-channel MOS transistors.

In this embodiment, the isolation transformer module 102 includes a first transformer T1 that is constituted by the first winding T11 and the second winding T12, and a resonant circuit 1021. The resonant circuit is electrically connected between the high-voltage switch circuit HS and the first winding T11.

The first transformer T1 further includes a first connection terminal T1a, a second connection terminal T1b, a third connection terminal T1c, a fourth connection terminal T1d, and a fifth connection terminal T1e. The first winding T11 is electrically connected between the first connection terminal T1a and the second connection terminal T1b. The sub-winding T12a is electrically connected between the third connection terminal T1c and the fourth connection terminal T1d. The sub-winding T12b is electrically connected between the third connection terminal T1c and the fifth connection terminal T1e. In this embodiment, the third connection terminal T1c also serves as a central tap of the second winding T12.

It should be noted that an iron core (not marked) is further disposed between the first winding T11 and the second winding T12, and the first winding T11 is electromagnetically coupled to the second winding T12, to implement voltage conversion between the two windings.

In this embodiment, the resonant circuit 1021 includes a first resonant capacitor Cr and a resonant inductor Lr that are connected in series to the first transmit terminal NA and the first connection terminal T2a, and the resonant circuit 1021 is configured to filter out an interference signal in the first alternating signal. In another embodiment of this application, the resonant circuit 1021 may be alternatively omitted.

In the low-voltage conversion module 103, the low-voltage switch circuit LS includes a switch circuit that includes two switch elements.

Specifically, the two switch elements are a fifth switch S5 and a sixth switch S6. The fifth switch S5 includes a fifth control terminal CS5, an eleventh conducting terminal ES11, and a twelfth conducting terminal ES12. The sixth switch S6 includes a sixth control terminal CS6, a thirteenth conducting terminal ES13, and a fourteenth conducting terminal ES 14.

The fifth control terminal CS5 is configured to receive a fifth control signal PS5, and the sixth control terminal CS6 is configured to receive a sixth control signal PS6.

The eleventh conducting terminal ES11 is electrically connected to the fifth connection terminal T1e, and the twelfth conducting terminal ES2 is electrically connected to the second ground terminal GND2. The thirteenth conducting terminal ES13 is electrically connected to the fourth connection terminal T1d, and the fourteenth conducting terminal ES14 is electrically connected to the second ground terminal GND2.

For the fifth switch S5, when the fifth switch S5 is a MOS transistor, the fifth control terminal CS5 is a gate G (not marked) of the MOS transistor, the eleventh conducting terminal ES11 is a drain D (not marked) of the MOS transistor, and the twelfth conducting terminal ES12 is a source S (not marked) of the MOS transistor. For the sixth switch S6, when the sixth switch S6 is a MOS transistor, the sixth control terminal CS6 is a gate G (not marked) of the MOS transistor, the thirteenth conducting terminal ES13 is a drain D (not marked) of the MOS transistor, and the fourteenth conducting terminal ES 14 is a source S (not marked) of the MOS transistor.

The filter winding T21 is electrically connected between the third connection terminal T1c and the high-voltage reference terminal VL+ of the second port P2. The filter capacitor Cf is electrically connected between the high-voltage reference terminal VL+ and the low-voltage reference terminal VL- of the second port P2.

The feedback module 104 includes a demagnetizing winding T22, a unidirectional transfer unit 1041, and a switching control unit 1042.

The unidirectional transfer unit 1041, the demagnetizing winding T22, and the switching control unit 1042 are electrically connected between the high-voltage bus terminal V+ and the low-voltage bus terminal V- of the first interface P1 in sequence. In this embodiment, the low-voltage terminal V- is the first ground terminal GND1.

A location of the demagnetizing winding T22 is set so that the demagnetizing winding T22 and the filter winding T21 constitute an electromagnetic coupler, that is, the demagnetizing winding T22 and the filter winding T21 constitute a flyback transformer T2. Locations of the unidirectional transfer unit 1041 and the switching control unit 1042 are adjacent to those of the high-voltage filter circuit HF and the high-voltage switch circuit HS in the high-voltage conversion module 101.

The switching control unit 1042 is configured to selectively control whether the demagnetizing winding T22 is in a conducting path. To be specific, the switching control unit 1042 controls the demagnetizing winding T22 not to be in a conducting path when the voltage conversion circuit 10 performs low-voltage conversion along the first direction F1, so that the filter winding T21 performs only a filtering function; and controls the demagnetizing winding T22 to be in a conducting loop when the voltage conversion circuit 10 performs high-voltage conversion along the second direction F2.

The unidirectional transfer unit 1041 is configured to control a current flow direction of the conducting path in which the demagnetizing winding T22 is located to be the second direction F2.

In this embodiment, the unidirectional transfer unit 1041 includes a feedback diode D1. An end of the demagnetizing winding T21 that is away from a switch element K1 is electrically connected to an anode of the feedback diode D1. A cathode of the feedback diode D1 is electrically connected to the high-voltage bus terminal VH+ of the first port P1.

The switching control unit 1041 may use the switch element K1 to control whether to form a conducting path. The switch element K1 is electrically connected between the first ground terminal GND1 and an end of the demagnetizing winding T21 that is away from the feedback diode D1. The switch element K1 may be a relay, a mechanical switch, or a transistor.

The switch element K1 is in an on state or a cut-off state depending on whether the voltage conversion circuit 10 performs low-voltage conversion along the first direction F1 or high-voltage conversion along the second direction F2. Specifically, the switch element K1 is in the cut-off state when the voltage conversion circuit 10 performs low-voltage conversion along the first direction F1, and is in the on state when the voltage conversion circuit 10 performs high-voltage conversion along the second direction F2.

When the switch element K1 is in the on state, the demagnetizing winding T21 is in the conducting loop. When the switch element K1 is in the cut-off state, no conducting path is formed in a circuit in which the demagnetizing winding T21 is located, that is, the demagnetizing winding T21 cannot form an induced current or an induced electromotive force, and therefore does not feed back electric energy obtained through electromagnetic induction to the high-voltage conversion module 101.

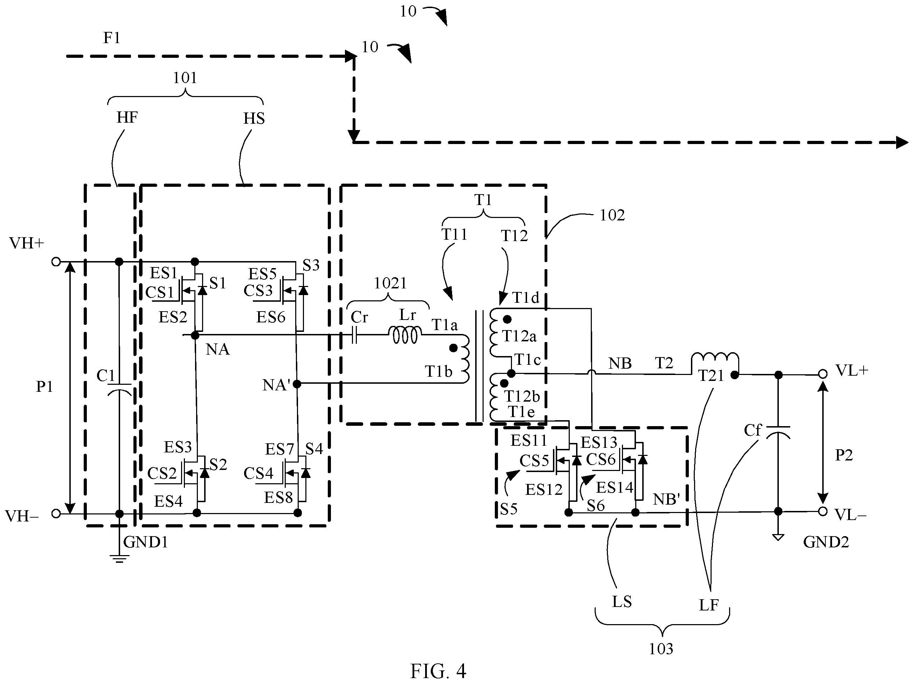

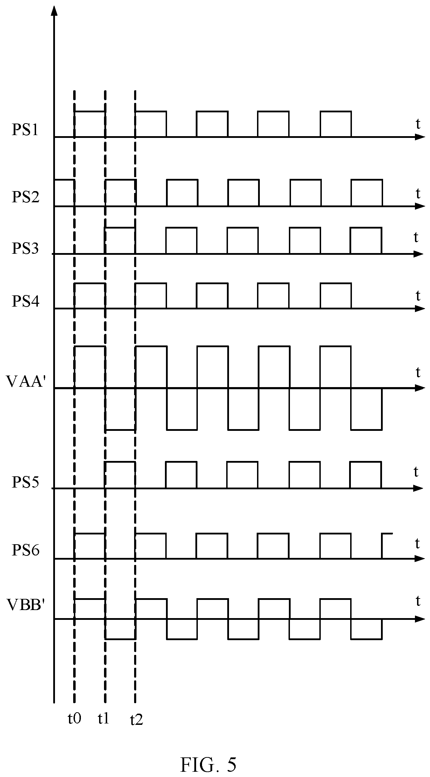

Refer to FIG. 4 and FIG. 5. FIG. 4 is a schematic diagram of circuit conduction when the voltage conversion circuit 10 performs low-voltage conversion along the first direction F1. FIG. 5 is a schematic diagram of voltage waveforms of nodes when the voltage conversion circuit 10 performs low-voltage conversion along the first direction F1.

As shown in FIG. 4, the voltage conversion circuit 100 performs low-voltage conversion along the first direction F1. In this case, the feedback unit 104 is not in an operating state. It should be noted that the voltage conversion circuit 100 performs low-voltage conversion along the first direction F1 and high-voltage conversion along the second direction F2 at different times. To be specific, voltage conversion in only one direction is performed at one time, and voltage conversion in two directions may be performed separately in different time periods.

Specifically, the high-voltage conversion module 101 receives the first direct-current voltage V1 from the first port P1, the high-voltage filter circuit HF filters the first direct-current voltage V1, and the high-voltage switch circuit HS converts the filtered first direct-current voltage V1 into the first alternating signal. As shown in FIG. 5, the four switch elements in the high-voltage switch circuit HS are in a corresponding on or cut-off state under control of the corresponding first control signal PS 1 to the corresponding fourth control signal PS4 respectively.

In a time period of t1 to t2, the first control signal PS1 and the fourth control signal PS4 respectively control the first switch S1 and the fourth switch S4 to be in an on state, and the second control signal PS2 and the third control signal PS3 respectively control the second switch S2 and the third switch S3 to be in a cut-off state. The first transmit terminal NA and the second transmit terminal NA' cooperate to output a positive first direct-current voltage V1.

In a time period of t2 to t3, when the second control signal PS2 and the third control signal PS3 respectively control the second switch S2 and the third switch S3 to be in an on state, and the first control signal PS1 and the fourth control signal PS4 respectively control the first switch S1 and the fourth switch S4 to be in a cut-off state, the first transmit terminal NA and the second transmit terminal NA' cooperate to output a negative first direct-current voltage V1.

Therefore, in the high-voltage switch circuit HS, the first transmit terminal NA and the second transmit terminal NA' cooperate to output the positive first direct-current voltage V1 and the negative first direct-current voltage V1 that change alternately. The positive first direct-current voltage V1 and the negative first direct-current voltage V1 that change alternately constitute the first alternating signal. A symbol VAA' in FIG. 5 indicates a voltage waveform diagram of the first alternating signal output by the first transmit terminal NA and the second transmit terminal NA'.

When the first winding T11 of the isolation transformer 102 receives the first alternating signal, the first winding T11 is electromagnetically coupled to the second winding T12, so that an induced voltage and an induced current are generated on both the sub-windings T12a and T12b of the second winding T12.

When the first control signal PS 1 and the fourth control signal PS4 respectively control the first switch S1 and the fourth switch S4 to be in the on state in the time period of t1 to t2, and the first transmit terminal NA and the second transmit terminal NA' cooperate to output the positive first direct-current voltage VI, correspondingly, the fifth control signal PS5 controls the fifth switch S5 to be in an on state, and the sixth control signal PS6 controls the sixth switch S6 to be in a cut-off state, that is, the sub-winding T21b is in a conducting loop. The sub-winding T21b generates an induced current and an induced voltage between the third connection terminal T1c and the fifth connection terminal T1e. The induced voltage between the third connection terminal T1c and the fifth connection terminal T1e is a positive first induced voltage, and is output from a node NB and a node NB'. The induced current is filtered by the filter winding T21 and the filter capacitor C2. In this embodiment, the node NB is the third connection Tc1, and the node NB' is the second ground terminal GND2.

When the second control signal PS2 and the third control signal PS3 respectively control the second switch S2 and the third switch S3 to be in the on state in the time period of t2 to t3, and the first transmit terminal NA and the second transmit terminal NA' cooperate to output the negative first direct-current voltage VI, correspondingly, the fifth control signal PS5 controls the fifth switch S5 to be in a cut-off state, and the sixth control signal PS6 controls the sixth switch S6 to be in an on state, that is, the sub-winding T21a is in a conducting loop. The sub-winding T21a generates an induced current and an induced voltage between the third connection terminal T1c and the fourth connection terminal T1d. The induced voltage between the third connection terminal T1c and the fourth connection terminal T1d is a negative first induced voltage, and is output from the nodes NB and NB'. The induced current is filtered by the filter winding T21 and the filter capacitor C2.

Therefore, in the low-voltage switch circuit LS, the nodes NB and NB' cooperate to output the positive first induced voltage and the negative first induced voltage that change alternately, to constitute the second converted alternating signal. A symbol VBB' in FIG. 5 indicates a voltage waveform diagram of the second converted alternating signal output by the node NB and the node NB'.

Corresponding to the positive and negative induced voltages, an induced current is filtered by the filter winding T21 and the filter capacitor C2, to obtain the second direct-current voltage V2, and the second direct-current voltage V2 is output to the second port P2.

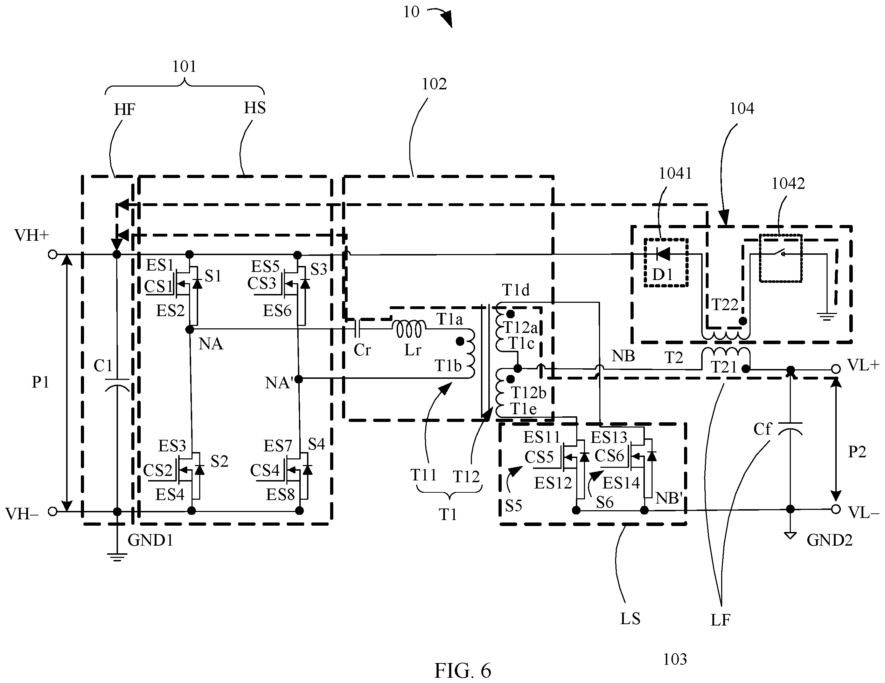

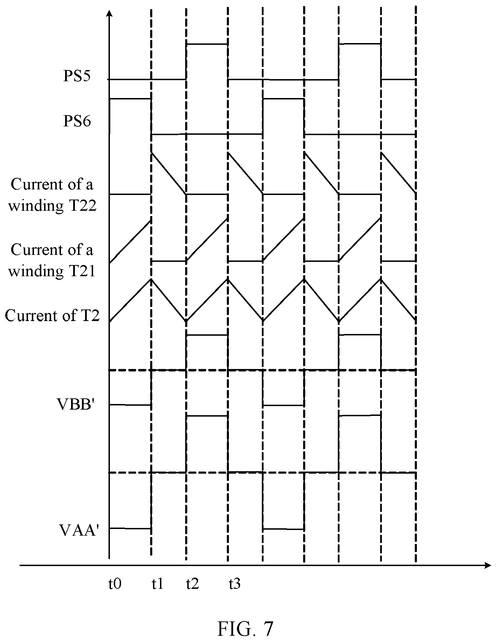

Refer to FIG. 6 and FIG. 7. FIG. 6 is a schematic diagram of circuit conduction when a voltage conversion circuit 10 performs high-voltage conversion along a second direction F2. FIG. 7 is a schematic diagram of voltage waveforms of nodes when a voltage conversion circuit 10 performs high-voltage conversion along a second direction F2. As shown in FIG. 6, the voltage conversion circuit 100 performs high-voltage conversion along the second direction F2. In this case, the feedback unit 104 is in an operating state.

The low-voltage conversion module 103 receives the second direct-current voltage V2 from the second port P2, the filter capacitor filters the second direct-current voltage V2, and the low-voltage switch circuit LS is controlled so that the filter winding T21 is in an exciting state or a demagnetizing state at different times. When the filter winding T21 is in the demagnetizing state, the feedback unit 104 feeds back electric energy released by the filter winding T21 during demagnetization to the high-voltage conversion module 101.

The low-voltage switch circuit LS generates the second alternating signal at the node NB and the node NB'. The second alternating signal is converted into the second converted alternating signal by the first transformer T1. The second converted alternating signal is transmitted from the first transmit terminal NA and the second transmit terminal NA' to the high-voltage switch circuit HS for rectification and to the high-voltage filter circuit HF for filtering, to obtain the first direct-current voltage V1 at the first port P1.

Specifically, as shown in FIG. 7, the two switch elements in the low-voltage switch circuit LS are in a corresponding on or cut-off state under control of the corresponding fifth control signal PS5 and the corresponding sixth control signal PS6 respectively.

In a first excitation sub-time period of t0 to t1, the fifth control signal PS5 controls the fifth switch S5 to be in a cut-off state, and the sixth control signal PS6 controls the sixth switch S6 to be in an on state. The second direct-current voltage V2 excites the filter winding T21 for energy storage by using the sub-winding T21b in which the fifth switch S5 is located. Therefore, a current flowing through the filter winding T21 gradually increases, and a positive second direct-current voltage V2 is generated at the third connection terminal T12c and the fourth connection terminal T12d.

In a demagnetization time period of t1 to t2, the fifth control signal PS5 controls the fifth switch S5 to be in a cut-off state, and the sixth control signal PS6 controls the sixth switch S6 to be in a cut-off state. The filter winding T21 is demagnetized by using the demagnetizing winding T22 and releases electric energy. However, the filter winding T21 is not in a conducting loop. Therefore, in this case, no current flows through the filter winding T21. In other words, a current on the filter winding T21 is zero. However, because an electromagnetic induction effect occurs between the demagnetizing winding T22 and the filter winding T21, a current on the demagnetizing winding T22 gradually decreases. Therefore, no voltage is generated between the third connection terminal T12c, the fourth connection terminal T12d, and the fifth connection terminal T12e. In other words, a voltage between the third connection terminal T12c, the fourth connection terminal T12d, and the fifth connection terminal T12e is 0 V in this case.

In addition, in the demagnetization time period of t1 to t2, an induced current on the demagnetizing winding T22 is rectified by the feedback diode D1 and filtered by the high-voltage filter circuit HF and then loaded to the first port P1.

In a second excitation sub-time period of t2 to t3, the fifth control signal PS5 controls the fifth switch S5 to be in an on state, and the sixth control signal PS6 controls the sixth switch S6 to be in a cut-off state. The second direct-current voltage V2 excites the filter winding T21 for energy storage by using the sub-winding T21a in which the sixth switch S5 is located. Therefore, a current flowing through the filter winding T21 gradually increases, and a positive second direct-current voltage V2 is generated at the third connection terminal T12c and the fifth connection terminal T12e.

The positive second direct-current voltage V2 generated at the third connection terminal T12c and the fourth connection terminal T12d in conjunction with the positive second direct-current voltage V2 generated at the third connection terminal T12c and the fifth connection terminal T12e generate the second alternating signal at the node NB and the node NB'. VBB' shown in FIG. 7 indicates a voltage waveform of the second alternating signal

In this embodiment, the demagnetizing winding T22 provides a freewheeling path for the filter winding T21, to ensure that the low-voltage conversion module 103 can accurately convert the second direct-current voltage V2 into the first alternating signal.

When the second winding T12 of the isolation transformer 102 receives the second alternating signal, the first winding T11 is electromagnetically coupled to the second winding T12, to generate an induced voltage and an induced current on the first winding T11, and further constitute the second converted alternating signal at the first transmit terminal NA and the second transmit terminal NA'. VAA' shown in FIG. 7 indicates a voltage waveform of the second converted alternating signal.

In a demagnetization time period of t3 to t4, the fifth control signal PS5 controls the fifth switch S5 to be in a cut-off state, and the sixth control signal PS6 controls the sixth switch S6 to be in a cut-off state. The filter winding T21 is demagnetized by using the demagnetizing winding T22 and releases electric energy. However, the filter winding T21 is not in a conducting loop. Therefore, in this case, no current flows through the filter winding T21. In other words, a current on the filter winding T21 is zero. However, because an electromagnetic induction effect occurs between the demagnetizing winding T22 and the filter winding T21, a current on the demagnetizing winding T22 gradually decreases. Therefore, no voltage is generated between the third connection terminal T12c, the fourth connection terminal T12d, and the fifth connection terminal T12e. In other words, a voltage between the third connection terminal T12c, the fourth connection terminal T12d, and the fifth connection terminal T12e is 0 V in this case.

In addition, in the demagnetization time period of t1 to t2, an induced current on the demagnetizing winding T22 is rectified by the feedback diode D1 and filtered by the high-voltage filter circuit HF and then loaded to the first port P1.

It should be noted that, as shown in FIG. 7, the first excitation sub-time period of t0 to t1, the demagnetization time period of t1 to t2, the second excitation sub-time period of t2 to t3, and the demagnetization time period of t3 to t4 are continuous in terms of time and do not overlap. The time period of t1 to t4 is merely a period of converting the second direct-current voltage V2 into the second alternating signal. In this case, a process of converting the second direct-current voltage V2 into the second alternating signal includes a plurality of consecutive periods, and the voltage conversion circuit 10 repeats an operating process of t1 to t4 in other periods. Details are not described herein again.

In this embodiment, because the first switch S1 to the fourth switch S4 of the high-voltage switch circuit HS are all N-channel MOS transistors, the first control signal PS1 to the fourth control signal PS4 may be in a suspended state. To be specific, the first switch S1 to the fourth switch S4 do not need to perform control, but a full-bridge rectifier circuit is constituted by body diodes in the first switch S1 to the fourth switch S4, to rectify the second converted alternating signal output by the first winding T11 from the first transmit terminal NA and the second transmit terminal NA'. Then the induced current is rectified by the high-voltage filter circuit HF to obtain the first direct-current voltage VI, and the first direct-current voltage V1 is loaded from the first port P1 to the load capacitor C0.

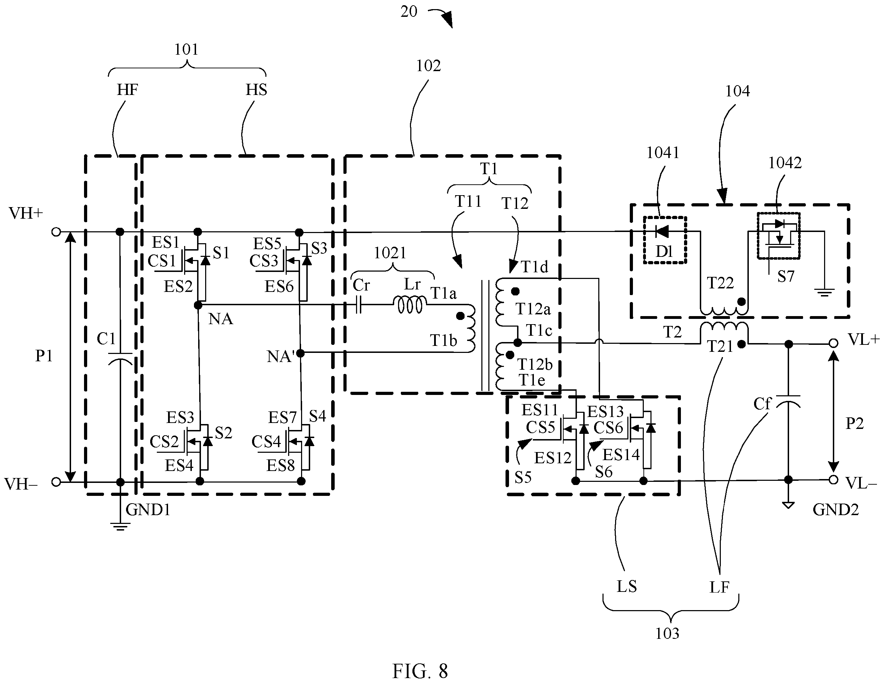

FIG. 8 is a schematic diagram of a specific circuit structure of a voltage conversion circuit 20 according to another embodiment of this application.

In this embodiment, the voltage conversion circuit 20 is basically the same as the voltage conversion circuit 10 in FIG. 3, except that a switching unit is a transistor S7. A source of the transistor S7 is electrically connected to a demagnetizing winding T22. The source and a drain of the transistor S7 are electrically connected to a first ground terminal GND. The source and a gate of the transistor S7 receive an external control signal. In this embodiment, the transistor S7 is an N-channel MOS transistor. Therefore, when the voltage conversion circuit 100 performs low-voltage conversion along a first direction F1, the gate of the transistor S7 receives a low-level control signal, and the transistor is controlled to be in a cut-off state, so that a circuit in which the demagnetizing winding T22 is located does not constitute a complete conducting loop, that is, there is no conducting path between a high-voltage bus terminal V+ and a low-voltage bus V- of the circuit in which the demagnetizing winding is located.

When the voltage conversion circuit 100 performs high-voltage conversion along a second direction F2, the gate of the transistor S7 receives a high-level control signal, and the transistor S7 is controlled to be in an on state, so that the circuit in which the demagnetizing winding T22 is located does not constitute a complete conducting loop, that is, a conducting path is formed between the high-voltage bus terminal V+ and the low-voltage bus V- of the circuit in which the demagnetizing winding T22 is located. A current induced by the demagnetizing winding T22 from a filter winding T21 can be transmitted in the conducting loop.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A voltage conversion circuit, comprising a high-voltage conversion module, an isolation transformer, a low-voltage conversion module, and a feedback module, wherein
the high-voltage conversion module converts, along a first direction by using the isolation transformer and the low-voltage conversion module, a first direct-current voltage received from a first port into a second direct-current voltage, wherein the first direct-current voltage is greater than the second direct-current voltage;
at a time different from when the high-voltage conversion module receives the first direct-current voltage from the first port, the low-voltage conversion module receives the second direct-current voltage from a second port, and converts the second direct-current voltage into the first direct-current voltage along a second direction by using the isolation transformer and the high-voltage conversion module, wherein the first direction is opposite to the second direction; and
the feedback module is configured to: induce, through electromagnetic induction, electric energy generated when the low-voltage conversion module converts the second direct-current voltage into the first direct-current voltage along the second direction, and transfer the induced electric energy to the high-voltage conversion module.

2. The voltage conversion circuit according to claim 1, wherein the high-voltage conversion module is configured to convert the first direct-current voltage into a first alternating signal along the first direction;
the low-voltage conversion module is configured to convert the second direct-current voltage into a second alternating signal along the second direction;
the isolation transformer is electrically connected to the high-voltage conversion module and the low-voltage conversion module, and is configured to: at different times, convert the first alternating signal into a first converted alternating signal along the first direction and transmit the first converted alternating signal to the low-voltage conversion module, or convert the second alternating signal into a second converted alternating signal along the second direction and transmit the second converted alternating signal to the high-voltage conversion module;
the low-voltage conversion module is further configured to convert the first converted alternating signal into the second direct-current voltage, and the high-voltage conversion module is further configured to convert the second converted alternating signal into the first direct-current voltage; and
the feedback module induces electric energy generated by the low-voltage conversion module when the low-voltage conversion module converts the second direct-current voltage into the second alternating signal.

3. The voltage conversion circuit according to claim 1 or 2, wherein the low-voltage conversion module comprises a low-voltage filter circuit, and the low-voltage filter circuit comprises a filter winding and a filter capacitor;
when the low-voltage conversion module receives the first alternating signal along the first direction, the filter winding serves as a filter inductor and constitutes a filter circuit with the filter capacitor to filter the first converted alternating signal;
when the low-voltage conversion module receives the second direct-current voltage along the second direction, the filter winding is in an exciting state for storing electric energy or a demagnetizing state for releasing electric energy at different times; and
the feedback module induces electric energy through electromagnetic induction when the filter winding is in the exciting state for storing electric energy, and feeds back the induced electric energy to the high-voltage conversion module when the filter winding is in the demagnetizing state for releasing electric energy.

4. The voltage conversion circuit according to claim 3, wherein the low-voltage conversion module further comprises a low-voltage switch circuit, and the low-voltage switch circuit electrically connects the filter winding to the filter capacitor;
the low-voltage switch circuit constitutes an excitation path for the filter winding in an excitation time period, and the low-voltage switch circuit constitutes a freewheeling path for the filter winding to release electric energy in a demagnetization time period, wherein the excitation time period and the freewheeling time period are alternately set in terms of time to convert the second direct-current voltage into the second alternating signal; and
the feedback module obtains electric energy through electromagnetic induction in the excitation time period, and releases the induced electric energy and feeds back the induced electric energy to the high-voltage conversion module in the demagnetization time period.

5. The voltage conversion circuit according to claim 4, wherein the feedback module comprises a demagnetizing winding, a switching control unit, and a unidirectional transfer unit, and the unidirectional transfer unit, the demagnetizing winding, and the switching control unit are electrically connected to the first port in sequence;
the demagnetizing winding and the filter winding constitute an electromagnetic coupler;
the switching control unit is configured to: when the high-voltage conversion module performs voltage conversion to the low-voltage conversion module along the first direction, control the demagnetizing winding not to be in a conducting path, so that the feedback module does not feed back energy; and when the low-voltage conversion module performs voltage conversion to the high-voltage conversion module along the second direction, control the demagnetizing winding to be in a conducting path, so that the feedback module feeds back energy to the high-voltage conversion module; and
the unidirectional transfer unit is configured to control a current flow direction of the conducting path in which the demagnetizing winding is located to be the second direction.

6. The voltage conversion circuit according to claim 5, wherein
when the low-voltage conversion module receives the first alternating signal along the first direction, the switching control unit controls the conducting path in which the demagnetizing winding is located to be in an electrically off state, no electromagnetic induction occurs between the filter winding and the demagnetizing winding, and the filter winding serves as a filter inductor; and
when the low-voltage conversion module outputs the second alternating signal along the second direction, the switching control unit controls the conducting path in which the demagnetizing winding is located to be in an electrically on state, electromagnetic induction occurs between the filter winding and the demagnetizing winding, and the filter winding transmits, to the high-voltage conversion module, obtained electric energy rectified by the unidirectional transfer unit.

7. The voltage conversion circuit according to any one of claims 4 to 6, wherein
the isolation transformer comprises a first winding and a second winding, wherein the first winding is electrically connected to the high-voltage conversion module, and the second winding is electrically connected to the low-voltage switch circuit;
when receiving the first converted alternating signal along the first direction, the low-voltage switch circuit controls the second winding to be electromagnetically coupled to the first winding, to rectify the first converted alternating signal; and
the converting the second direct-current voltage into the second alternating signal comprises:
controlling, by the low-voltage switch circuit, the filter winding to be excited for storing electric energy and output a first direct-current voltage of a first phase in a first excitation sub-time period of the excitation time period;
controlling, by the low-voltage switch circuit, the filter winding to be demagnetized for releasing electric energy in the demagnetization time period;
controlling, by the low-voltage switch circuit, the filter winding to be excited for storing electric energy and output a first direct-current voltage of a second phase in a second excitation sub-time period of the excitation time period, wherein the first phase is opposite to the second phase; and
controlling, by the low-voltage switch circuit, the filter winding to be demagnetized for releasing electric energy in the demagnetization time period, wherein
the first excitation sub-time period of the excitation time period, the demagnetization time period, and the second excitation sub-time period of the excitation time period are continuous in terms of time and do not overlap.

8. The voltage conversion circuit according to claim 7, wherein
the second winding comprises two series-connected sub-windings, the low-voltage switch circuit comprises two switch elements, and the two switch elements are respectively electrically connected to the two sub-windings, and are configured to control the two sub-windings to be electromagnetically coupled to the first winding.

9. The voltage conversion circuit according to claim 8, wherein
in the first excitation sub-time period of the excitation time period and the second excitation sub-time period of the excitation time period, the two switch elements in the low-voltage switch circuit respectively control the two sub-windings to be electromagnetically coupled to the first winding at different times, and separately control electric energy stored in the filter winding to generate the second alternating signal;
in the demagnetization time period, the two switch elements control the two sub-windings not to be electromagnetically coupled to the first winding, to control the filter winding to be demagnetized for releasing stored electric energy; and
when the first winding receives the first alternating signal along the first direction, the two switch elements in the low-voltage switch circuit respectively control the two sub-windings to be electromagnetically coupled to the first winding at different times, to output the first converted alternating signal, and the two switch elements rectify the first converted alternating signal.

10. The voltage conversion circuit according to any one of claims 1 to 9, wherein the high-voltage conversion module comprises a high-voltage filter circuit and a high-voltage switch circuit, and the high-voltage filter circuit and the high-voltage switch circuit are connected in series between the first port and the isolation transformer;
the high-voltage filter circuit is configured to filter the first direct-current voltage received or output from the first port; and
the high-voltage switch circuit is configured to: convert the first alternating signal into the first alternating signal, or rectify a signal obtained by converting the second direct-current voltage input by the isolation transformer and the low-voltage conversion module.

11. A power system, comprising the voltage conversion circuit according to any one of claims 1 to 10, a high-voltage storage battery, and a low-voltage storage battery, wherein the high-voltage storage battery is electrically connected to the first port, and the low-voltage storage battery is electrically connected to the second port; and
the high-voltage storage battery is configured to receive or output the first direct-current voltage, and the low-voltage storage battery is configured to receive or output the second direct-current voltage.

12. The power system according to claim 11, wherein the voltage conversion circuit receives the second direct-current voltage from the low-voltage storage battery, converts the second direct-current voltage into the first direct-current voltage along the second direction, and then precharges a load capacitor in a load.
